Europäisches Patentamt

European Patent Office

Office européen des brevets

(11) Publication number: **0 027 539**

**A1**

(12) **EUROPEAN PATENT APPLICATION**

(21) Application number: **80105432.1**

(22) Date of filing: **11.09.80**

(51) Int. Cl.³: **F 16 J 15/447**
**F 16 J 15/16**

(30) Priority: **19.10.79 US 86599**

(43) Date of publication of application:
**29.04.81 Bulletin 81/17**

(84) Designated Contracting States:
**AT BE DE FR GB SE**

(71) Applicant: **CRANE PACKING COMPANY**
**6400 Oakton Street**
**Morton Grove, Illinois 60053(US)**

(72) Inventor: **Wheelock, Edward A.**
**641 Schooner Point**
**Schaumberg Illinois 60194(US)**

(74) Representative: **Baillie, Iain Cameron et al,**
**c/o Ladas & Parry Blumenstrasse 48**
**D-8000 München 2(DE)**

(54) **Radial seal.**

(57) A radial seal (10) is adapted to be inserted between a housing (12) and a shaft (14) for sealing against the loss of fluid or entry of foreign materials. The seal (10) includes a first annular retainer (22) to be inserted into the housing (12) and a second annular retainer (16) to be positioned on the shaft (14). An endless sealing member (18,20) is carried by each retainer (16,22) and the sealing members are provided with mating sealing surfaces which may be of the labyrinth type and of the end face type. One of the sealing members (18,20) may be provided with a slit or cut which permits flexing and assembly of the sealing members in substantially the same radial plane.

FIG-1

EP 0 027 539 A1

Croydon Printing Company Ltd.

RADIAL SEAL

- 1 -

This invention relates to a radial seal and in particular to a radial seal for sealing the space between a housing and a rotating shaft which passes through the housing.

Various types of seals have been used for this purpose. Originally packings, formed of asbestos fiber and other materials, were used. Prior to 1950, mechanical end face seals, such as that disclosed in U.S. Patent No. 2,432,694, were adapted and used as an improved substitute for packings. End face seals are normally expensive, require lapping of their radial mating faces and are usually installed internally of the housing - requiring disassembly for repair. Such seals are particularly adapted for use in high temperature, high pressure environments.

Another type of seal is the well known labyrinth seal. U.S. Patent Numbers 3,776,559 and 4,114,902 are examples of this type seal. Each uses mating sealing rings which have a land and groove arrangements on one or both of the rings to define a tortuous, serpentine path which restricts or precludes leakage.

Another type of seal is the oil or radial lip seal. These seals usually comprise an annular elastomeric molded product having a central aperture which sealingly surrounds the shaft and extends against the housing. Such seals are used in low pressure environments and are subject to wear. An example of this type of seal is depicted in U.S. Patent No. 3,511,512.

The object of this invention is to provide a seal which has several or all of the following advantages:

1. Use as a labyrinth seal or as a combination of a labyrinth seal and end face seal;

2. Low cost;

3. Ease of assembly;

4. Ease of installation on the exterior of the housing;

5. Durability and a long expected life;

6. Resistance to high temperature;

7. Use as a substitute for an oil seal; and

8. Ease of replacement.

The present invention provides a radial seal adapted to be inserted between a housing and a rotating shaft extending through said housing, said seal being characterized by a first annular retainer adapted to be inserted in sealing relation in said housing; a second annular retainer adapted to be positioned in sealing relation on said shaft in substantially the same radial plane as said first retainer; and inner and outer endless annular sealing members interposed between said retainers, said sealing members having mating circumferential surfaces for limiting passage of material into or out of said housing.

Preferably, the mating circumferential surfaces define a labyrinth configuration. One of the sealing members is preferably provided with flexible means to facilitate their concentric assembly.

In the drawings:

FIGURE 1 is an elevational view of the preferred embodiment of our invention as installed in an intended housing;

FIGURE 2 is an exploded perspective view of the components of a preferred embodiment of our invention;

FIGURE 3 is an elevational view in section of the preferred embodiment of FIGURE 1 depicting the last assembly step; and

FIGURE 4 is a view similar to that of FIGURE 3 with the seal being aligned to function as a combination end face - labyrinth seal.

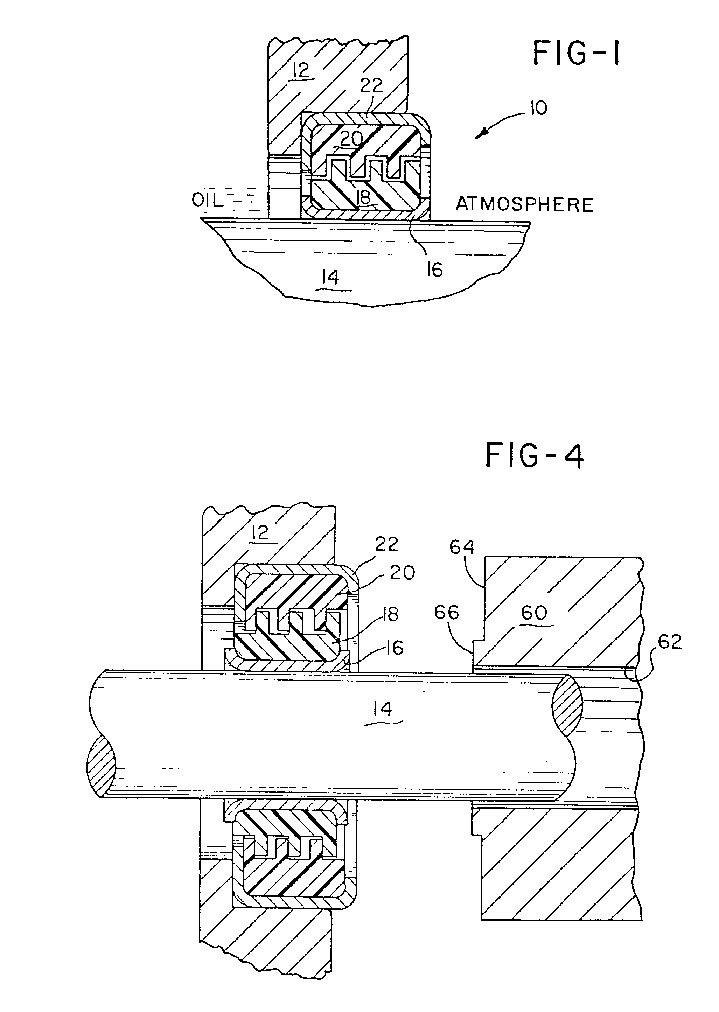

As shown in the preferred embodiment of FIGURE 1, the seal 10 of our invention is used to seal the space between a housing 12 and a rotating shaft 14 passing through the housing. The purpose of the seal is to preclude loss of fluid from the housing 12 and entry of foreign particles into the housing from the atmosphere.

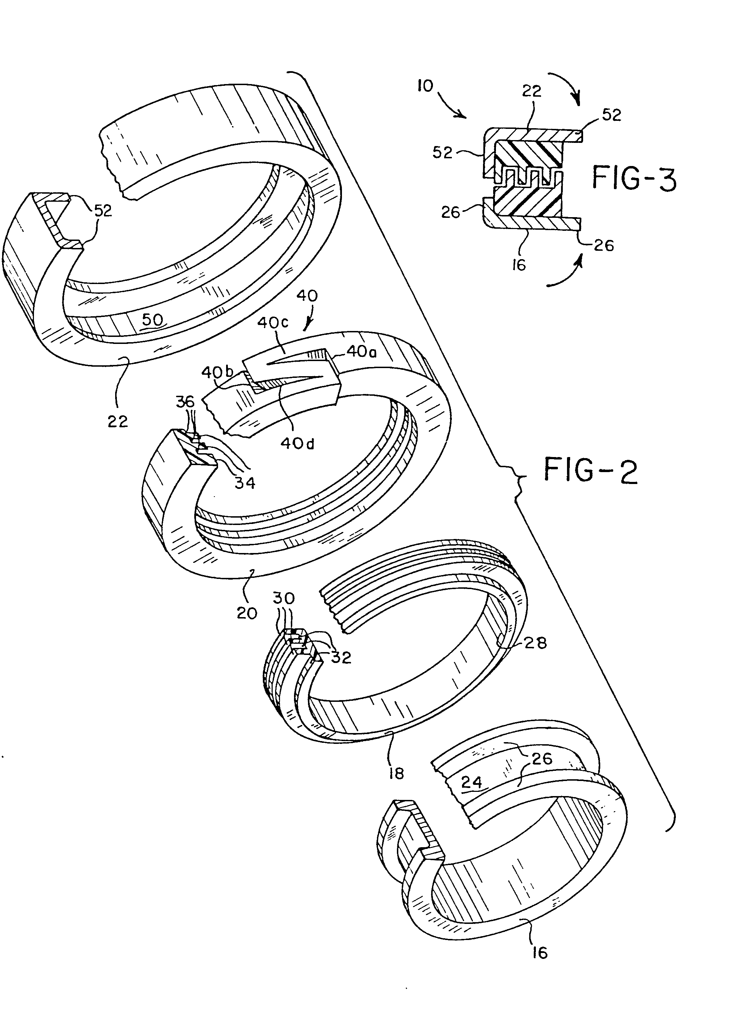

The preferred embodiment comprises four basic components arranged concentrically in generally the same radial plane. The four components include an inner or shaft retainer 16, an inner sealing member 18, an outer sealing member 20 and a housing or outer retainer 22. These components are separately illustrated in FIGURE 2.

The inner retainer 16 is cylindrical and has a base section 24 whose internal circumference is adapted to be press fit over the shaft 14 in sealing engagement. On each side of this base are two radially extending flanges 26 which position and retain the inner sealing member 18.

The internal circumference 28 of this sealing member 18 is mounted over the external circumference of base 24 in frictional, sealing engagement. The external circumference is provided with three lands 30 and three grooves 32. Preferably this member 18 is formed of a substantially non-elastic material such as a plastic or metal.

The second sealing member 20 is mated over the first member 28. This member or ring 20 is also provided with three lands 34 and three grooves 36 which mate with those of member 18 to define a labyrinth as depicted in FIGURES 1 and 3. Preferably, ring 20 is formed of a substantial rigid, non-elastic plastic. To permit the outer ring 20 to be mounted over the inner ring 18, the ring is provided with slits or cuts 40. Preferably these include two short axial slits 40a and b and two circumferential slits 40c and d. The slits 40c and d are parallel to each other and extend circumferentially from the end of the axial slits 40a and b. The slits do not intersect one another so as to sever the ring 20. Instead, they merely permit the ring to be flexed and expanded over the inner member 18 while retaining its endless continuous character. After it is expanded over inner member 20, it is returned to its original shape, with its lands 34 meshing in the grooves 32 of inner ring 18.

The outer retainer 22 is mounted over outer ring 20 with its base 50 being in sealing relation to the outer circumference of this ring. Retainer 22 is also provided with two inwardly directed annular flanges 52.

To assemble these four components, the two sealing rings 18 and 20 are first mated together. They are then inserted over the partially formed retainers 16 and 22 in sealing relation as shown in FIGURE 3. In this condition, only one of the flanges 26 and 52 have been formed. After insertion of the sealing rings onto these retainers, the other flanges are formed by radially bending material from the base.

Upon forming of the flanges, the seal is then inserted over the shaft 14 as shown in FIGURE 1. Such exterior assembly does not require disassembly of the housing. The retainers 16 and 22 are sized so as to engage the shaft and a recess of the housing 12 in a tight, friction sealing engagement. When assembled and installed, in this manner, the seal is of the labyrinth type, defining a restricted, tortuous path with limits or precludes leakage of fluid from the housing or entry of foreign particles.

This preferred embodiment may also be installed in another manner - to define an end face seal. This installation is depicted in FIGURE 4 and is accomplished by the use of a special tool 60. This tool is annular and has an aperture 62 permitting the tool to be telescoped over the shaft to force the seal into position. For this purpose, a first radial face 64 of the tool engages the outer retainer 22 while a boss or second radial face 66 engages the inner retainer. Axial movement of the tool 60 forces the outer retainer 22 into the housing recess while the boss 66 causes the inner retainer 16 and inner seal ring 18 to move a slightly greater distance. This further movement of the inner ring 18 causes the radial faces or sides of the lands 30 to engage the radial faces of lands 34 of outer ring 20. When assembled in this manner, the seal functions as both an end face seal and a labyrinth seal. If desired, the axial spacing between the lands and grooves may be varied so that fewer radial faces are in contacting engagement.

Those skilled in the seal art will appreciate the various types of material which may be used to form the seal rings. Such types may include elastomers of various complaint materials such as nylon, vinyl chloride, polytetrafluoroethylene and ductile metals. To maximize durability and minimize wear, the sealing rings of our preferred embodiment are formed of a glass filled polytetrafluoroethylene having the following composition:

- 6 -

| Material | Percentage |
|----------|------------|
| Polytetrafluoroethylene | 80% |
| Fiber Glass | 15% |
| Moly Disulfide | 5% |

In view of the low coefficient of friction of polytetrafluoroethylene, the seal will have a long life. Under some circumstances, it may be desirable to form the rings of different materials. This polytetrafluoroethylene composition may be formed in rods and machined into the configurations shown or, alternatively, molded to such shape with the slits being subsequently made by a knife or other cutting tool. If desired, one seal ring which does not have the slits 40 may be formed of a metal.

Numerous modifications to our preferred embodiment are possible. For example, the inner ring 18 can be provided with slits or cuts which permit contraction of its circumference for insertion into the outer ring 18.

CLAIMS

1. A radial seal adapted to be inserted between a housing and a rotating shaft extending through said housing, said seal being characterized by a first annular retainer adapted to be inserted in sealing relation in said housing; a second annular retainer adapted to be positioned in sealing relation on said shaft in substantially the same radial plane as said first retainer; and inner and outer endless annular sealing members interposed between said retainers, said sealing members having mating circumferential surfaces for limiting passage of material into or out of said housing.

2. A seal according to claim 1, characterized in that one of said sealing members is provided with slit means for permitting its flexing and positioning in a generally radial plane relative to the other sealing member.

3. A seal according to claim 1 or 2, characterized in that said mating circumferential surfaces are radially extending.

4. A seal according to claim 3, characterized in that the radially extending circumferential surfaces are in contact.

5. A seal according to any of claims 1 to 4, characterized in that said inner annular sealing member has an external circumference having a plurality of lands and grooves formed therein, and said second annular sealing member has an internal circumference having a plurality of lands and grooves, the lands and grooves of said first and second sealing members being in mating relationship to define a labyrinth seal forming a serpentine path to limit passage of material into or out of the housing.

6.  A seal according to claim 5, characterized in that said second annular sealing member has at
least two slits formed therein for permitting said member to be flexed and expanded over the lands and grooves
of said first labyrinth sealing member.

7.  A seal according to claim 5, characterized in that said first annular labyrinth sealing
member has at least one slit therein for permitting it
to be contracted and inserted into said second labyrinth
sealing member.

8.  A seal according to any of claims 1 to
7, characterized in that at least one of said sealing
members is formed of a polytetrafluoroethylene material.

9.  A seal according to claim 8, characterized in that said polytetrafluoroethylene material
includes a glass material.

10.  A seal according to any of claims 5 to 9,
characterized in that side walls of the lands of one of
said sealing members are in contact with the side walls
of the other sealing member to define an end face seal.

11.  A seal according to any of claims 1 to
10, characterized in that said first and second annular retainer members are formed of a metallic material.

1/2

FIG-1

12
22
20
18
10
OIL
ATMOSPHERE
14
16

FIG-4

12
22
20
18
16
64
66
60
62
14

0027539

FIG-3

FIG-2

## European Patent Office

### EUROPEAN SEARCH REPORT

| | DOCUMENTS CONSIDERED TO BE RELEVANT | | CLASSIFICATION OF THE APPLICATION (Int. Cl.3) |
|---|---|---|---|
| Category | Citation of document with indication, where appropriate, of relevant passages | Relevant to claim | |
| X | <u>DE - C - 375 421</u> (A. KEGRESSE)<br>* claim; fig. 1 *<br><br>-- | 1,3,5 | F 16 J 15/447<br>F 16 J 15/16 |
| X | <u>DE - U - 1 846 065</u> (H.J. MORSCH)<br>* claim 1; fig. *<br><br>-- | 1-3,5 | |
| X | <u>FR - A - 1 230 578</u> (ATELIERS MECANIQUES DU DOUAISIS)<br>* fig. 4, 6 to 12 *<br><br>-- | 1,5 | |
| | <u>DE - A - 2 007 141</u> (INDUSTRIEWERK SCHAEFFLER OHG)<br>* claims 1, 2, 4; fig. 1 to 5 *<br><br>-- | 1,5 | TECHNICAL FIELDS SEARCHED (Int.Cl.3)<br><br>F 16 C 33/00<br>F 16 J 15/00 · |
| | <u>FR - A - 1 315 391</u> (PRECISMECA S.A.)<br>* fig. 1, 2 *<br><br>-- | 1,5 | |
| | <u>GB - A - 1 293 906</u> (WELLWORTHY LTD.)<br>* page 1, lines 66 to 80 *<br><br>-- | 8,9 | |
| | <u>US - A - 2 137 546</u> (R.R. SEARLES)<br>* page 1, column 2, lines 33 to 51; fig. 1, 2 *<br><br>-- | 1,3,4 | |
| | <u>US - A - 3 739 444</u> (E.J. VARGO)<br>* claims 1, 6; fig. 1A to 1D *<br><br>-- | 1,5,11 | |
| | <u>US - A - 3 897 072</u> (E. INKA et al.)<br>* fig. 1 to 17 *<br><br>-- <br>./.. | 6,7 | |

The present search report has been drawn up for all claims

| Place of search | Date of completion of the search | Examiner |
|---|---|---|
| Berlin | 06-01-1981 | MASSALSKI |

EPO Form 1503.1  06.78

0027539

| | DOCUMENTS CONSIDERED TO BE RELEVANT | | CLASSIFICATION OF THE APPLICATION (Int. Cl.) |
|---|---|---|---|
| Category | Citation of document with indication, where appropriate, of relevant passages | Relevant to claim | |
| D,A | <u>US - A - 3 776 559</u> (T.L. CAWTHORN)<br>* entire document *<br>-- | | |
| D,A | <u>US - A - 4 114 902</u> (D.C. ORLOWSKI)<br>* entire document *<br>---- | | |

TECHNICAL FIELDS SEARCHED (Int. Cl.)

EPO Form 1503.2   05.78